# FASCICULE DE BREVET EUROPEEN

(11) **EP 1 704 682 B1**
(45) Date de publication et mention de la délivrance du brevet: **11.07.2018**
(21) Numéro de dépôt: 04817599.6
(22) Date de dépôt: 24.12.2004
(51) Int. Cl.: H04L 12/46

(54) **SYSTEME DE COMMUNICATION ENTRE RESEAUX IP PRIVES ET PUBLICS**
SYSTEM ZUR KOMMUNIKATION ZWISCHEN PRIVATEN UND ÖFFENTLICHEN IP-NETZWERKEN
SYSTEM FOR COMMUNICATION BETWEEN PRIVATE AND PUBLIC IP NETWORKS

(30) Priorité: 16.01.2004 FR 0400425
(43) Date de publication de la demande: 27.09.2006
(73) Titulaire: Orange, 75015 Paris (FR)
(72) Inventeur: DALOZ, Claude, F-22300 Lannion (FR); ZOUGHLAMI, Yacine, F-92230 Gennevilliers (FR); FELTEN, Frédéric, F-22140 Tonquedec (FR)
(86) Numéro de dépôt international: PCT/FR2004/003387
(87) Numéro de publication internationale: WO 2005/079014

(56) Documents cités:
- US-A1- 2001 023 482
- US-A1- 2002 013 848
- US-B1- 6 304 973

## Description

La présente invention concerne un système de communication entre un premier terminal informatique dans un réseau IP privé et un deuxième terminal informatique dans un réseau IP public.

D'une manière générale, l'invention trouve une application particulièrement avantageuse dans le domaine des communications IP entre réseaux publics et réseaux privés, et plus spécialement quand un réseau IP public doit communiquer avec un réseau IP privé.

Afin de remédier au nombre limité d'adresses IP dans la version 4, l'IANA (Internet Assigned Number Authority) a normalisé la notion de réseaux privés et d'adresses privées dans la RFC (Request For Command) 1918. Ces adresses privées, affectées dans des plages particulières, ne sont pas routables par les routeurs du réseau public, comme l'Internet par exemple. Cette solution permet de raccorder un grand nombre de terminaux informatiques dans un même réseau privé.

Les terminaux de ce réseau qui ont besoin de dialoguer avec d'autres terminaux informatiques du réseau public doivent passer par des équipements de frontière de réseau. Certains de ces équipements sont connus sous le nom de passerelles (ou « gateway » en terminologie anglo-saxonne). Les passerelles ont une adresse IP du réseau public et une adresse IP du réseau privé. Elles sont mandataires des terminaux du réseau privé pour leurs requêtes vers le réseau public. Elles reçoivent les requêtes d'un terminal privé via leur adresse IP privée et reformulent ces requêtes sur le réseau public en utilisant leur adresse IP publique. La réponse à cette requête arrive à la passerelle qui la retransmet au terminal du réseau privé ayant fait la requête en utilisant l'adresse privée. Ce mécanisme nommé NAT (Network Address Translation) est normalisé dans la RFC 3022.

Associés à ces passerelles, d'autres équipements de frontière de réseau appelés pare-feu (ou « firewall » en terminologie anglo-saxonne) sont des entités de sécurité qui permettent de contrôler l'accès de et vers l'Internet, voir aussi le brevet US-B1-6304973. Ces pare-feu font l'objet de règles plus ou moins restrictives.

Il existe pour certains types d'applications des éléments appelés agents de proximité (ou « proxy » en terminologie anglo-saxonne). Ces agents de proximité sont des mandataires spécifiques à des protocoles particuliers, les plus connus étant les proxys HTTP et FTP (File Transfer Protocol). Ils reçoivent les requêtes des terminaux du réseau privé et font la requête en leur nom sur le réseau public. Ils peuvent être disposés derrière des passerelles. Etant des points de passage obligé des communications d'un protocole donné, on leur a ajouté des services particuliers comme le mécanisme de cache pour les agents de proximité du protocole http.

Une des caractéristiques principales du mécanisme NAT est qu'il est asymétrique. Un paquet IP peut passer librement du réseau privé vers le réseau public. Par contre, un paquet ne peut passer du réseau public vers le réseau privé que si un paquet a fait le chemin inverse. Ce qui implique qu'un terminal du réseau privé doit être à l'initiative de toute communication.

Le mécanisme sous-jacent est basé sur la notion de route. Une route, pour un équipement effectuant une opération NAT, est un triplet de couples « adresse IP-port ». Quand un paquet arrive sur l'équipement de frontière de réseau venant du réseau privé, cet équipement enregistre le couple « adresse IP-port » du terminal informatique du réseau privé qui a émis le paquet, ce couple sera nommé couple1. Le couple « adresse IP-port » de destination dans le réseau public sera appelé couple2, de même que le couple « adresse IP-port » de l'interface publique de l'équipement de frontière de réseau, par lequel le paquet va être envoyé, sera nommé couple3. Si un paquet arrive sur l'interface publique venant du réseau public, l'équipement de frontière de réseau cherche une route correspondante, c'est à dire celle dont la source correspond à un couple2 et la destination à un couple3 d'une route préalablement élue. Si une telle route existe, le paquet sera alors transmis vers le couple1 de la route élue. S'il n'existe pas de route élue, le paquet n'est pas transmis sur le réseau privé. Ainsi, un paquet arrivant du réseau public ne pourra être transmis sur le réseau privé que si un paquet du réseau privé lui a préalablement créé une route. D'où l'asymétrie du mécanisme de NAT.
Les limites de ce mécanisme sont multiples et apparaissent de plus en plus manifestes avec la diversité des applications sur l'Internet et la multiplication des réseaux privés: aujourd'hui en effet, l'utilisation des réseaux privés ne se limite plus aux entreprises, mais concerne aussi une grande partie du public, le plus souvent celui connecté via l'ADSL.

Prenons l'exemple d'une intervention d'assistance. La plupart des terminaux informatiques sont aujourd'hui équipés d'un serveur http embarqué qui permet la configuration. On ne pourrai par exemple pas accepter aujourd'hui une assistance où un technicien depuis le réseau public vérifierait la configuration d'un équipement pris en défaut et sa correction par simple connexion HTTP. Au mieux, le technicien pourrait demander au client de rediriger un port de sa passerelle vers l'équipement en question en créant lui-même une route, ce qui représenterait une opération tout aussi infaisable pour le client que pourrait l'être la correction de la configuration effectuée parle client lui-même.
Les règles régissant le fonctionnement des pare-feu peuvent aller du plus simple au plus compliqué. Le plus simple est de tout ou de ne rien autoriser. Pour avoir une stratégie de sécurité plus cohérente, les pare-feu fonctionnent aujourd'hui en se basant sur le type d'applications. En autorisant une application à aller sur l'Internet, on autorise en fait les paquets à destination du port associé à ce type d'application à aller sur l'Internet (Port 80 pour HTTP, 21 pour FTP). Certaines nouvelles applications utilisent une multitude de ports, souvent dynamiques. On peut citer par exemple les applications de jeux ou celles de téléphonie et de visiophonie. L'attribution dynamique des ports ne permet pas de définir des règles adéquates. On se retrouve dans l'obligation de laisser tous les paquets passer ou au mieux d'ouvrir une plage complète de ports, stratégies insatisfaisantes du point de vue de la sécurité.

Aussi, le problème technique à résoudre par l'objet de la présente invention est de proposer un système de communication entre un premier terminal informatique dans un réseau IP privé et un deuxième terminal informatique dans un réseau IP public, comprenant un équipement de frontière de réseau apte à recevoir des requêtes de connexion d'un équipement du réseau IP privé et à les relayer à un équipement du réseau IP public, qui permettrait de résoudre le problème des connexions entrantes vers un réseau privé, et de simplifier, sans la compromettre, la stratégie de sécurité appliquée à la frontière du réseau privé, avec une configuration minimale ou nulle des éléments existants sur l'équipement de frontière, passerelle et pare-feu.

La solution au problème technique posé consiste, selon la présente invention, en ce que ledit système de communication comprend également, dans le réseau IP privé, un système de médiation, associé audit premier terminal, apte à mettre à disposition dudit deuxième terminal une interface IP, et, dans le réseau IP public, un serveur de contrôle apte à contrôler ledit système de médiation via un tunnel de communication traversant ledit équipement de frontière de réseau, le système de médiation étant apte à se connecter au serveur de contrôle en établissant, à partir d'un port du système de médiation, le tunnel de communication traversant l'équipement de frontière réseau avec un port de service dédié du serveur de contrôle.

La description qui va suivre en regard des dessins annexés, donnés à titre d'exemples non limitatifs, fera bien comprendre en quoi consiste l'invention et comment elle peut être réalisée.
La figure 1 est un schéma général d'un système de communication conforme à l'invention.
La figure 2 est un schéma détaillé du système de communication de la figure 1.

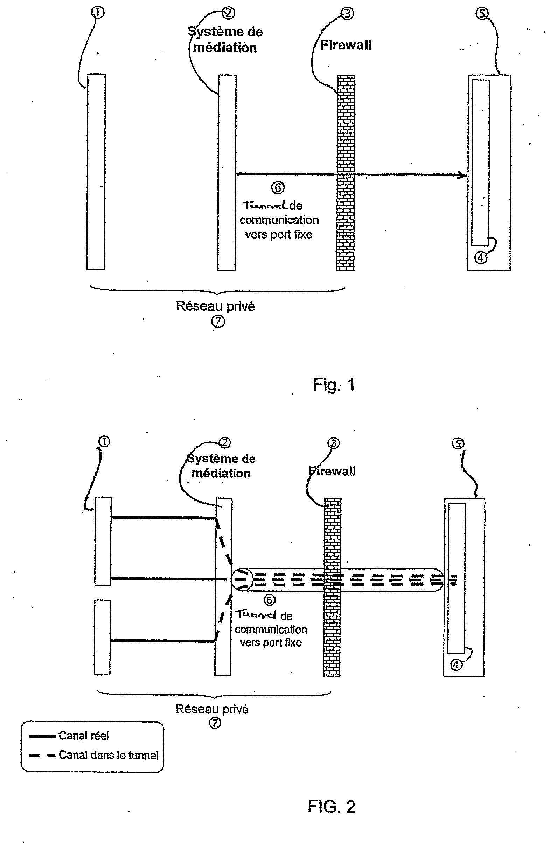

Sur la figure 1 est représenté un système de communication entre un premier terminal informatique 1 dans un réseau IP privé 7 et un deuxième terminal informatique 5 dans un réseau IP public, ledit système comprenant un équipement 3 de frontière de réseau, du type passerelle et/ou pare-feu. Le système de communication de la figure 1 doit permettre de traverser cet équipement et de rendre sa configuration simple, tout en conservant de bonnes performances. Le système est indépendant des protocoles au dessus de TCP (Transmission Control Protocol) et UDP (User Datagram Protocol). On peut l'utiliser pour tous les types d'applications qui veulent résoudre efficacement le problème de traversée des passerelles et pare-feu.

De manière générale, le terminal 5, via l'utilisation du serveur 4 de contrôle, et grâce à la présence du système 2 de médiation sur le réseau privé 7, doit pouvoir disposer de l'interface TCP/UDP/IP du système 2 de médiation pour rendre le service qu'il propose. Le système 2 de médiation met ainsi à disposition du terminal 5 son interface TCP/UDP/IP via le serveur 4 de contrôle.

A cette fin, on crée à travers la passerelle/pare-feu 3 un tunnel 6 de communication entre le système 2 de médiation et le serveur 4 de contrôle.

Les éléments 2 et 4 sont complètement génériques et seul le terminal informatique a l'intelligence du service rendu au terminal 1 du réseau privé 7.

Pour communiquer avec le terminal IP externe 5, le terminal IP interne 1 s'adressera au système 2 de médiation. De même, le terminal IP externe 5 s'adressera au serveur 4 de contrôle. Le tunnel 6 sera établi par le système 2 vers le serveur 4 vers un port unique et fixe, répondant ainsi aux règles générales de traversée du mécanisme NAT et des pare-feu. Cela permet de minimiser les impacts au niveau de la configuration du routeur et de gérer efficacement les connexions des clients aux serveurs.

Par la suite, on appellera le port unique et fixe du serveur 4 de contrôle "port de service".

Par tunnel 6, on entend un canal TCP et aucun ou plusieurs canaux UDP, entre le système 2, par un port quelconque, et le serveur 4, par ledit port de service.

Une description détaillée du fonctionnement du système de communication conforme à l'invention va maintenant être présentée en regard de la figure 2.

Afin de s'initialiser, le système 2 de médiation se connecte sur un port fixé du serveur 4 de contrôle via un canal TCP. Il utilise cette connexion pour informer le serveur 4 de son état ainsi que de son environnement. Ces informations peuvent aller de sa configuration dans le réseau privé 7 (adresse IP, masque de sous-éseau ....) à la description du service qu'il veut utiliser, en passant par une authentification ou identification.

Une fois l'initialisation réalisée, les opérations entre le système 2 et le serveur 4 seront de 3 types:
- Commandes d'ouverture, de redirection, de connexion, de mise en écoute et de fermeture de ports.
- Relais de paquets et d'événements.
- Maintien des canaux.

Un protocole léger sera utilisé entre le système 2 et le serveur 4 pour annoncer et décrire ces différentes opérations. Seule la sémantique de ce protocole sera présentée ici, la syntaxe étant laissée à la discrétion des réalisateurs du service.

### 1. Commandes d'ouverture, de redirection et de fermeture de ports

Les commandes d'ouverture, de redirection et de fermeture de ports sont faites par le serveur 4 au système 2 de médiation.

### • Ouverture:

Le serveur 4 demande l'ouverture d'un port en envoyant l'adresse IP et le numéro de port à ouvrir (le système 2 de médiation peut être sur une machine du réseau local qui dispose de plusieurs adresses IP sur ce réseau), le type de service (TCP ou UDP), et l'importance accordée au numéro de port (on peut demander un numéro de port souhaité mais non obligatoire, le premier port libre à partir du numéro demandé sera ainsi attribué. On peut au contraire demander un numéro de port obligatoire).

La réponse à la demande d'ouverture se fait par l'envoi d'un identifiant du port ouvert et du numéro de port attribué, ou d'un code d'erreur en cas d'échec.

### • Redirection:

La redirection de ports répond à une contrainte particulière.

Le canal de service présenté plus haut est basé sur TCP. Tel qu'il est défini, il peut transmettre des paquets qui arrivent sur l'interface interne du système 2 de médiation en TCP ou UDP.

En faisant transiter les paquets qui sont arrivés au dessus d'UDP sur le canal TCP, on leur ajoute des caractéristiques particulières. En effet, TCP est un protocole dit fiable par rapport à UDP, c'est-à-dire que les paquets transitant sur TCP sont acquittés par le receveur. Les paquets non acquittés sont réexpédiés par l'émetteur. Ce mécanisme de fiabilité implique un délai. Certaines applications choisissent d'utiliser UDP pour éviter le délai induit par la fiabilité. Le mécanisme de redirection de ports a pour but de permettre à l'application mettant en oeuvre l'invention de garder UDP comme couche de transport sous-jacente.

Le serveur 4 demande la redirection d'un port en envoyant l'adresse IP et le numéro de port à rediriger (le système 2 peut être sur une machine du réseau local qui dispose de plusieurs adresses IP sur ce réseau), et l'importance accordée au numéro de port (on peut demander un numéro de port souhaité mais non obligatoire, le premier port libre à partir du numéro demandé sera ainsi attribué. On peut au contraire demander un numéro de port obligatoire).

La réponse à la demande de redirection se fait par l'envoi d'un identifiant du port redirigé et du numéro de port attribué, ou d'un code d'erreur en cas d'échec.

Une fois une redirection mise en place, tout paquet arrivant sur le port redirigé sera systématiquement relayé vers le serveur 4 sur son port fixe, en utilisant UDP.

### • Connexion :

Le serveur 4 demande au système 2 de médiation de connecter un port TCP préalablement ouvert, à une adresse IP et un port d'un système IP du réseau privé 7. Le serveur 4 accompagnera sa demande de l'identifiant du port préalablement ouvert, ainsi que l'adresse IP et le port auquel il doit se connecter.

La réponse à la demande de connexion se fait par l'envoi d'un code d'acquittement ou d'un code d'erreur en cas d'échec.

### • Mise en écoute:

Les ports TCP sont de 2 types :
∘ soit des ports serveurs ou de service : ce sont des ports qui acceptent des connexions d'autres ports. Ils sont donc en écoute. C'est typiquement le cas des ports 80 des serveurs HTTP.
∘ soit des ports clients ou ports de connexion : ce sont les ports qui vont aller se connecter aux ports serveurs.

Lors de l'ouverture d'un port TCP (mécanisme décrit plus haut), ce port n'est pas encore spécialisé. Il devient port client (système 2) dés que le serveur 4 demande de le connecter à un autre port.

Pour spécialiser un port TCP ouvert en port serveur, la partie serveur de l'invention envoie à la partie cliente (système 2) une commande de mise en écoute en précisant l'identifiant du port ouvert concerné.

La réponse à la demande de mise en écoute se fait par l'envoi d'un code d'acquittement ou d'un code d'erreur en cas d'échec.

### • Fermeture :

Le serveur 4 demande la fermeture d'un port en envoyant l'identifiant du port reçu lors de l'ouverture ou de la redirection.

La réponse à la demande de fermeture se fait par l'envoi d'un code d'acquittement ou d'un code d'erreur en cas d'échec.

### 2. Relais de paquets et d'événements

### • Relais de paquets:

Cette opération est bidirectionnelle. Le serveur 4 peut demander au système 2 d'envoyer un paquet sur le réseau privé 7. Il accompagnera cette demande de l'identifiant du port à utiliser pour émettre le paquet (identifiant reçu lors de l'ouverture du port), de l'adresse IP et du numéro de port destination et du paquet à envoyer.

Dans l'autre sens, le système 2 de médiation relayera un paquet qu'il a reçu sur un port ouvert préalablement par le serveur 4 en indiquant l'identifiant du port de réception, l'adresse IP et le numéro de port d'émission ainsi que le paquet reçu.

### • Relais d'événements:

Les événements relayés par le client (système 2) au serveur 4 sont des événements sur les ports ouverts. Ces événements sont :
∘ Connexion d'un système IP du réseau interne 7 à un port serveur TCP ouvert (correspondant à la séquence SYN, SYN/ACK, ACK).
∘ Demande de fermeture (message TCP FIN) ou destruction (message TCP RST) d'une connexion TCP.

### 3. Maintien des canaux

Sur l'ensemble des équipements réseau traversés par le tunnel 6 entre le client (système 2) et le serveur 4, des mécanismes de scrutation des routes actives peuvent exister. Ces mécanismes vérifient la non obsolescence de routes, c'est-à-dire des 3 couples « adresse IP-port ». Si aucun paquet n'ayant pour coordonnées source et destination ces couples ne traverse l'équipement 3 pendant un laps de temps (appelé TTL pour Time To Live), la route sera détruite. A titre d'exemple, cela empêchera ensuite un paquet venant du serveur 4 vers le client 2 de passer l'équipement 3. Le tunnel 6 est ainsi cassé.

Pour éviter ce problème, le client 2 enverra sur les canaux ouverts vers le serveur 4 un paquet (dit de maintien de canal) avant l'occurrence du TTL du canal en question.

## Revendications

1. Système de communication entre un premier terminal informatique (1) dans un réseau IP privé (7) et un deuxième terminal informatique (5) dans un réseau IP public, comprenant un équipement (3) de frontière de réseau apte à recevoir des requêtes de connexion d'un équipement du réseau IP privé et à les relayer à un équipement du réseau IP public, **caractérisé en ce que** ledit système de communication comprend également :
• dans le réseau IP privé, un système (2) de médiation, associé audit premier terminal (1), apte à mettre à disposition dudit deuxième terminal (5) une interface IP, et,
• dans le réseau IP public, un serveur (4) de contrôle apte à contrôler ledit système (2) de médiation via un tunnel (6) de communication traversant ledit équipement (3) de frontière de réseau ;
le système de médiation (2) étant apte à se connecter au serveur de contrôle (4) en établissant, à partir d'un port du système de médiation (2), le tunnel de communication (6) traversant l'équipement de frontière réseau (3) avec un port de service dédié du serveur de contrôle (4).

2. Système de communication selon la revendication 1, **caractérisé en ce que** ladite interface IP est une interface TCP/UDP/IP.

3. Système selon la revendication 2, **caractérisé en ce que** ledit tunnel (6) de communication est un canal TCP apte à transmettre des paquets arrivant sur une interface interne du système (2) de médiation en TCP ou UDP.

4. Système selon l'une quelconque des revendications 1 à 3, **caractérisé en ce que** le système (2) de médiation est apte à relayer un paquet reçu sur un port ouvert préalablement par le serveur (4) de contrôle en indiquant un identifiant du port de réception, une adresse IP et un numéro de port d'émission ainsi que le paquet reçu.

## Patentansprüche

1. System zur Kommunikation zwischen einem ersten Informationsterminal (1) in einem privaten IP-Netz (7) und einem zweiten Informationsterminal (5) in einem öffentlichen IP-Netz, umfassend eine Netzbegrenzungsausrüstung (3), die geeignet ist, Verbindungsanforderungen einer privaten IP-Netzausrüstung zu empfangen und diese an eine öffentliche IP-Netzausrüstung weiterzuleiten,
**dadurch gekennzeichnet, dass** das Kommunikationssystem ebenso umfasst:
• in einem privaten IP-Netz, ein Vermittlungssystem (2), das mit dem ersten Terminal (1) assoziiert und geeignet ist, eine IP-Schnittstelle für den zweiten Terminal (5) zur Verfügung zu stellen, und
• in dem öffentlichen IP-Netz, einen Steuer-Server (4), der geeignet ist, das Vermittlungssystem (2) über einen Kommunikationstunnel (6) zu steuern, der die Netzbegrenzungsausrüstung (3) durchquert;
wobei das Vermittlungssystem (2) geeignet ist, sich mit dem Steuer-Server (4) zu verbinden, indem, von einem Port des Vermittlungssystems (2), der Kommunikationstunnel (6), der die Netzbegrenzungsausrüstung (3) durchquert, mit einem dedizierten Service-Port des Steuer-Servers (4) hergestellt wird.

2. Kommunikationssystem nach Anspruch 1,
**dadurch gekennzeichnet, dass** die IP-Schnittstelle eine TCP/UDP/IP-Schnittstelle ist.

3. System nach Anspruch 2,
**dadurch gekennzeichnet, dass** der Kommunikationstunnel (6) ein TCP-Kanal ist, der geeignet ist, Pakete, die an einer internen Schnittstelle des Vermittlungssystems (2) ankommen, im TCP oder UDP zu übertragen.

4. System nach einem der Ansprüche 1 bis 3,
**dadurch gekennzeichnet, dass** das Vermittlungssystem (2) geeignet ist, ein Paket weiterzuleiten, das an einem zuvor von dem Steuer-Server (4) geöffneten Port empfangen wurde, indem ein Identifikator des Empfangs-Ports, eine IP-Adresse und eine Emissions-Portnummer sowie das empfangene Paket angezeigt werden.

## Claims

1. System for communication between a first computer terminal (1) in a private IP network (7) and a second computer terminal (5) in a public IP network, comprising a network boundary device (3) able to receive connection requests from a device of the private IP network and to relay them to a device of the public IP network, **characterized in that** said communication system also comprises:
• in the private IP network, a mediation system (2), associated with said first terminal (1), able to make an IP interface available to said second terminal (5), and
• in the public IP network, a control server (4) able to control said mediation system (2) via a communication tunnel (6) passing through said network boundary device (3);
the mediation system (2) being able to connect to the control server (4) by establishing, from a port of the mediation system (2), the communication tunnel (6) passing through the network boundary device (3) with a dedicated service port of the control server (4).

2. Communication system according to Claim 1, **characterized in that** said IP interface is a TCP/UDP/IP interface.

3. System according to Claim 2, **characterized in that** said communication tunnel (6) is a TCP channel able to transmit packets arriving at an internal interface of the mediation system (2) over TCP or UDP.

4. System according to any one of Claims 1 to 3, **characterized in that** the mediation system (2) is able to relay a received packet on a port opened beforehand by the control server (4) by indicating an identifier of the receive port, an IP address and a send port number, and the received packet.
